# EUROPEAN PATENT APPLICATION

(11) **EP 1 802 112 A2**
(43) Date of publication of application: **27.06.2007**
(21) Application number: 06126427.1
(22) Date of filing: 18.12.2006
(51) Int. Cl.: H04N 5/50

(54) **Display apparatus and control method thereof**

(30) Priority: 22.12.2005 KR 20050127819
(71) Applicant: SAMSUNG ELECTRONICS CO., LTD., Suwon-si, Gyeonggi-do (KR)
(72) Inventor: Shin, Kil-young, Yeongtong-gu, Suwon-si, Gyeonggi-do (KR)
(74) Representative: Robinson, Ian Michael

(57) **Abstract**

A display apparatus includes a channel tuning unit (10) which receives a broadcasting signal, a user interface unit (UI) (60) for a user to select at least one of a simple search function and a full search function for automatic channel search, a memory (50), and a controller (70) which controls the channel tuning unit (10) to sequentially tune a center frequency of each channel based on frequency information of each channel that has already been stored when the simple search function is selected and controls the memory (50) to store the tuned channel data.

## Description

Apparatuses and methods consistent with the present invention relate to a display apparatus and a control method thereof, and more particularly, to a display apparatus for high-speed channel searching and a control method thereof.

In general, a display apparatus incorporating television-broadcasting reception functionality has an automatic channel setting function that searches all channels and automatically sets channels that are capable of receiving a broadcasting signal.

At this time, a conventional display apparatus sequentially searches channels by using a channel frequency table. Herein, a broadcasting method such as NTSC (National Television Systems Committee), ATSC (Advanced Television System Committee) respectively uses a predetermined frequency according to a particular nation or region. Therefore the conventional display apparatus searches for channels by using the predetermined frequency information.

However, the conventional display apparatus executes auto fine tuning (AFT) for each channel when executing the automatic channel searching function. That is, a center frequency for each channel is tuned and a fine tuning process is performed for tuning a (+) frequency bandwidth and a (-) frequency bandwidth, with respect to the center frequency in the case that no broadcasting signal exists therein. When it is determined that a broadcasting signal is received through the AFT process, the corresponding frequency is set to be a channel frequency.

Today, the broadcasting system provides various services such as analog broadcasting, digital broadcasting, cable broadcasting, and satellite broadcasting, and therefore a user can watch more varied broadcasting channels compared to the past. However, much time for channel searching will be required when the automatic channel searching function is set and thus the AFT process is performed for all channels in the conventional display apparatus.

For example, when there are 2 to 69 sky-wave broadcasting channels and 1 to 125 cable broadcasting channels for an analog TV, it takes 8 to 10 minutes to search the entire 193 channels.

According to the present invention there is provided an apparatus and method as set forth in the appended claims. Preferred features of the invention will be apparent from the dependent claims, and the description which follows.

An aspect of the present invention provides a display apparatus and a control method thereof for reducing channel search time by using a simple channel search function that sequentially tunes the center frequency of each channel.

The foregoing and/or other aspects of the present invention can be achieved by providing a display apparatus comprising: a channel tuning unit which receives a broadcasting signal; a user interface(UI) for a user to select a simple search function and/or a full search function for automatic channel search; a memory; and a controller which controls the channel tuning unit to sequentially tune the center frequency of each channel based on frequency information of each channel that has already been stored when the simple search function is selected and controls the memory to store tuned channel data.

According to an exemplary embodiment of the present invention, when the full search function is selected, the controller controls the channel tuning unit to sequentially fine-tune a predetermined frequency bandwidth on the basis of the center frequency of each channel and controls the memory to store the fine-tuned channel data.

According to an exemplary embodiment of the present invention, the display apparatus further comprises a setting storage which stores a setting value for the automatic channel search selected through the UI, and wherein the controller controls the channel tuning unit to perform the simple search function and/or the full search function according to the setting value stored in the setting storage.

According to an exemplary embodiment of the present invention, the UI comprises a user operation unit which selects the automatic channel search.

According to an exemplary embodiment of the present invention, the UI comprises a UI generator which generates a UI menu for the automatic channel search.

According to an exemplary embodiment of the present invention, the controller controls the UI generator to generate a UI menu for selection of the full search function when the tuning of the center frequency of each channel is finished.

According to an exemplary embodiment of the present invention, when the full search function is selected through the UI, the controller controls the channel tuning unit to sequentially fine-tune a predetermined frequency bandwidth based on the center frequency of each channel and store the fine-tuned channel data in the memory.

The foregoing and/or other aspects of the present invention can be achieved by providing a method for controlling a display apparatus comprising: selecting a simple search function and/or a full search function for automatic channel search; sequentially tuning a center frequency of each channel by using a channel tuning unit based on frequency information that has been stored for each channel when the simple search function is selected; and storing tuned channel data in a memory.

According to an exemplary embodiment of the present invention, the method further comprises: when the full search function is selected, sequentially fine-tuning a predetermined frequency bandwidth by using the channel tuning unit based on the center frequency of each channel; and storing the fine-tuned channel data in the memory.

According to an exemplary embodiment of the present invention, the method further comprises: storing a setting value in a setting storage for automatic channel search selected by a user; and performing the simple search function and/or the full search function according to the setting value stored in the setting storage.

According to an exemplary embodiment of the present invention, the method further comprises: when the tuning is completed, generating a UI menu for selecting the full search function.

According to an exemplary embodiment of the present invention, the method further comprises: when the full search function is selected through the UI menu, sequentially fine-tuning a predetermined frequency bandwidth based on the center frequency of each channel.

According to an exemplary embodiment of the present invention, the method further comprises storing fine-tuned channel data in the memory.

The above and/or other aspects and advantages of the prevent invention will become apparent and more readily appreciated from the following description of the exemplary embodiments, taken in conjunction with the accompany drawings, in which:
Figure 1 is a control block diagram illustrating a display apparatus according to an exemplary embodiment of the present invention.
Figure 2 illustrates a control flowchart of a display apparatus according to an exemplary embodiment of the present invention.

Reference will now be made in detail to exemplary embodiments of the present invention, examples of which are illustrated in the accompanying drawings, wherein like reference numerals refer to like elements throughout. The exemplary embodiments are described below so as to explain the present invention by referring to the figures.

Hereinafter, an exemplary embodiment of the present invention will be described in detail with reference to the accompanying drawings.

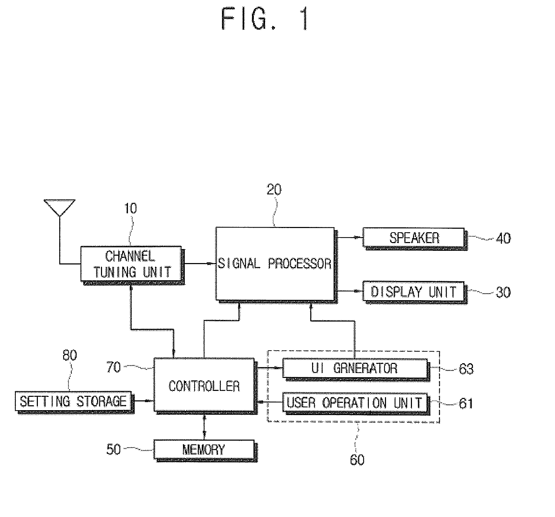

Figure 1 is a control block diagram of a display apparatus according to an exemplary embodiment of the present invention. As shown in Figure 1, the display apparatus includes a channel tuning unit 10, a signal processor 20, a display unit 30, a speaker 40, a memory 50, a user interface (UI) 60, and a controller 70.

The channel tuning unit 10 includes one or a plurality of tuners for tuning broadcasting signals input from an antenna, a demodulator and a decoder for demodulating the tuned signals, and a multiplexer (Mux), and the channel tuning unit 10 tunes the broadcasting signals having a frequency bandwidth that corresponds to a tuning control signal of the controller 70. The tuner includes an analog tuner and a digital tuner such that it receives each of an analog broadcasting signal and a digital broadcasting signal. Also, the tuner may include a multi-tuner for receiving both analog and digital broadcasting signals.

When the input broadcasting signal is a digital broadcasting signal, the demodulator demodulates the digital broadcasting signal through a vestigial sideband (VSB) modulation process and an error correction process and outputs the demodulated signal in the form of a transport stream.

The tuned digital broadcasting signal of a channel is processed through the signal processor 20 and displayed on the display unit 30. Herein, the signal processor 20 may further have various functions corresponding to a format of the input video signals. For example, the signal processor 20 may include an analog to digital (A/D) converting function for converting input video signals in various formats into a digital video signal in a specific format, a digital decoding function, a scaling function for adjusting a vertical frequency, a resolution, and an aspect ratio of an input digital/analog video signal in accordance with an output specification of the display unit 30, and a predetermined format converting function.

Herein, the display unit 30 may be applied to various types of display modules such as a cathode ray tube (CRT), a digital light processing (DLP) device, a liquid crystal display (LCD), and a plasma display panel (PDP).

The memory 50 stores channel data (to be described later) of a channel searched by the controller 70, and may be provided as an erasable programmable read-only memory (EPROM) or an electrically erasable programmable read-only memory (EEPROM). At this time, the channel data stored in the memory 50 may be referred to when tuning a channel selected by a user.

The UI 60 is provided to receive a user's choice for the automatic channel search function, and as shown in Figure 1, the UI 60 includes a user operation unit 61 that generates an input control signal according to operation by the user and/or a UI generator 63 for generating UI menus. At this time, the user operation unit 61 may have a remote control, a front control panel of the display apparatus, and a controller for processing a signal input from the remote control or the front control panel. The remote control has a button for a channel search function, a channel up/down key, and number buttons. The UI generator 63 may be realized by an integrated circuit (IC) generating an on-screen-display (OSD). The UI menus generated by the UI generator 63 is combined with the broadcasting signal that has been currently processed by the signal processor 20, and then displayed on the display unit 30. The UI menus may include selection items for selecting the automatic channel search function, for example, a simple searching function and/or a full searching function.

The user operation unit 61 can be more easily controlled by using a hot key or a voice recognition means or the like. That is, the user may select the desired function either of the simple search function or the full search function by using the remote control and/or through the UI menus displayed on the display menu 30. When the user operation unit 61 is provided as a hot key, hot keys for the simple search function and the full search function can be separately provided, but one hot key that has been used in a conventional automatic channel search function may be used. Further descriptions related thereto will be provided later.

The controller 70 according to the present exemplary embodiment controls the channel tuning unit 10 to perform the selected search function when the simple search function and/or the full search function is selected through the UI 60. The controller 70 may be provided as a central processing unit (CPU) or a micro controller unit (MCU).

When the simple search function is selected, the controller 70 applies a tuning control signal to control the channel tuning unit 10 to sequentially tune the center frequency of the corresponding channel based on channel frequency information, checks whether the corresponding channel is available based on a stored result of the signal processor 20, and stores channel data in the memory 50 if an available channel exists.

In more detail, when the simple search function is selected, the controller 70 controls the channel tuning unit 10 to sequentially tune the center frequency of each channel. When no broadcasting signal is detected after the tuning, the channel tuning unit 10 tunes a center frequency of the next channel. Herein, when a broadcasting signal is detected after the tuning, channel data of the corresponding channel is stored in the memory 50. As described, when the simple search function is selected, the channel tuner 10 sequentially tunes only center frequencies of the respective channels and thus channel searching time can be significantly reduced. In view of the development of broadcasting technology, there is a high possibility of detecting a broadcasting signal by tuning only a center frequency.

Existence of a valid broadcasting signal, for example, a valid digital broadcasting signal, can be determined by parsing a packet header after demodulating a received digital broadcasting signal and converting the demodulated signal into a digital stream. That is, since a packet header of a broadcasting signal contains a unique packet identifier (PID), whether a valid broadcasting signal is input can be determined by parsing the packet header.

Meanwhile, conventionally, the controller 70 performs auto fine tuning (AFT) left and right by adding (+) and subtracting (-) a certain frequency bandwidth, with respect to the center frequency of each channel when the full search function is selected. For example, when the center frequency of the channel is 55.25 MHz, the controller 70 fine-tunes left and right by adding/subtracting 500 kHz to/from the center frequency for performing AFT. Also, the controller 70 stores channel data after performing the fine-tuning.

In addition, the controller 70 performs both the simple search function and the full search function when both of them are selected.

When the simple search function is completed, the controller 70 controls the UI generator 63 to generate UI menus for selecting a full search function that performs AFT for each channel. Whether to display the UI menus can be determined through a manufacturing process or by a user. Hence, the user may select the full search function when the user is not satisfied with a result of the simple search function.

Therefore, when the channel search function is selected, the simple search function is performed first to reduce channel search time. In addition, a UI for selecting the full search function is provided so that a user-desired channel search function can be selected.

When a certain channel is selected by the user, the controller 70 applies the tuning control signal so that the channel tuning unit 10 tunes the corresponding channel frequency based on the cannel data stored in the memory 50 and controls the signal processor 20 such that a broadcasting signal of the corresponding channel is displayed on the display unit 30.

In addition, the frequency information stored in the memory 50 and referred to by the controller 70 for channel searching may include center frequency and frequency bandwidth of a channel determined in accordance with a broadcasting method.

Another display apparatus according to an exemplary embodiment of the present invention may further include a setting storage 80 for storing a setting value for the channel searching method selected by the user, and it can be provided as a flag or a register. That is, the controller 70 stores a channel search method selected by the user through the UI 60 in the setting storage 80 and performs the simple search function, or the full search function, or the UI menu display function in accordance with the setting value stored in the setting storage 80 when the user selects the automatic channel search function through the user operation unit 61.

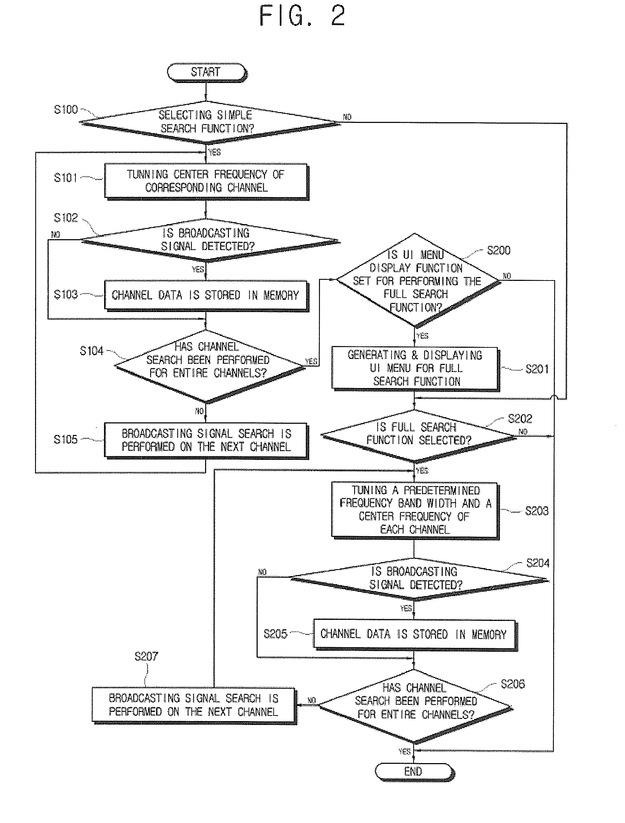

A method for controlling the display apparatus according to an exemplary embodiment of the present invention will be described with reference to Figure 2.

As shown in Figure 2, when the user selects the simple search function through the UI menus of the UI 60 and/or through the user operation unit 61 (S100), the controller 70 controls the channel tuning unit 10 to tune the center frequency of the corresponding channel based on frequency information on each channel, which has been already stored in the memory 50 (S101).

When a broadcasting signal is detected as a result of the tuning of the center frequency of the corresponding channel (S102), the corresponding channel data is stored in the memory 50 (S103).

Then, it is determined that whether channel search has been performed for entire channels (S104), and a broadcasting signal search is performed on the next channel if the channel search is not finished (S105). Herein, when a broadcasting signal is not detected after tuning center frequency of one channel, the channel search is moved on the next channel (S105).

Meanwhile, when the full search function is selected through the UI (S202), an automatic channel full search function is performed so as to perform AFT for each channel (S203). When a valid broadcasting signal is detected in the corresponding channel as a result of the fine tuning (S204), the corresponding channel data is stored in the memory 50 (S205) and a channel is set. Whether the full search has been performed on all the entire channels is determined (S206), and the full search is moved on the next channel if it has not been performed yet (S207). In addition, a channel that does not have a valid broadcasting signal is skipped and the next channel is searched (S207), and the fine tuning is performed for the corresponding channel (S203).

When the fine tuning is finished on the entire channels (S206), the channel search function is terminated.

Meanwhile, after sequentially tuning for the center frequency of each channel is completed (S104), the controller 70 determines whether the UI menu display function is set for performing the full search function (S200). When the UI menu display function is set, the controller 70 controls the UI generator 63 to generate a UI menu for selecting an automatic channel full search function to perform AFT for each channel, and controls the UI menu to be displayed on the display 30 (S201).

When the user selects the full search function on the UI menu (S202), the controller 70 controls the channel tuning unit 10 to perform the full search function (S203 to S207).

When the user does not select the automatic channel full search function through the UI 60 (S201), operation of the channel search function is terminated. In this way, search time can be reduced by performing the simple search function first when the channel search function is selected. Also, the conventional full search function may be performed by user's request, thereby improving the convenience of the user.

When a specific channel is selected by the user, the controller 70 may apply the tuning control signal to the channel tuning unit 10 to control the channel tuning unit 10 to perform the channel search operation based on the channel data stored in the memory 50 in accordance with the automatic channel simple search function and/or the automatic channel full search function.

As described above, according to another exemplary embodiment of the present invention, the automatic channel search function may be selected through the user operating unit 61. In this case, the controller 70 may check the setting value stored in the setting storage 80 and perform one of the simple search function and the full search function, or perform both the simple search function and full search function according to the setting value. Further, the controller 70 may perform the UI menu display function after performing the simple search function according to the setting value.

The above-described exemplary embodiments of the present invention may be applied to all display apparatuses having a TV receiving function, and it can be further applied to a display apparatus that receives various broadcasting signals, such as an analog broadcasting signal, a digital broadcasting signal, a cable broadcasting signal, a satellite broadcasting signal, and etc.

As described above, a display apparatus and a control method of performing a simple channel search that sequentially tunes the center frequency of each channel, thereby reducing time for channel searching, can be provided.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A display apparatus comprising:
a channel tuning unit (10) which receives a broadcasting signal;
a user interface unit (UI) (60) for a user to select at least one of a simple search function and a full search function for automatic channel search;
a memory (50); and
a controller (70) which controls the channel tuning unit (10) to sequentially tune a center frequency of each channel based on frequency information of each channel that has already been stored when the simple search function is selected and controls the memory (50) to store the tuned channel data.

2. The display apparatus of claim 1, wherein, when the full search function is selected, the controller (70) controls the channel tuning unit (10) to sequentially fine-tune a predetermined frequency bandwidth on the basis of the center frequency of each channel and controls the memory (50) to store fine-tuned channel data.

3. The display apparatus of claim 1 or 2, further comprising a setting storage which stores a setting value for the automatic channel search selected through the UI unit (60), wherein the controller (70) controls the channel tuning unit (10) to perform the at least one of the simple search function and the full search function according to the setting value stored in the setting storage.

4. The display apparatus of claim 1, 2 or 3, wherein the UI unit (60) comprises a user operation unit which selects the automatic channel search.

5. The display apparatus of any preceding claim, wherein the UI unit (60) comprises a UI generator (63) which generates a UI menu for the automatic channel search.

6. The display apparatus of claim 5, wherein the controller (70) controls the UI generator (63) to generate a UI menu for selection of the full search function when the tuning of the center frequency of each channel is finished.

7. The display apparatus of claim 6, wherein when the full search function is selected through the UI unit (60), the controller (70) controls the channel tuning unit (10) to sequentially fine-tune a predetermined frequency bandwidth based on the center frequency of each channel and store the fine-tuned channel data in the memory (50).

8. A method for controlling a display apparatus comprising:
selecting at least one of a simple search function and a full search function for automatic channel search;
sequentially tuning a center frequency of each channel by using a channel tuning unit (10) based on frequency information that has been stored for each channel when the simple search function is selected; and
storing the tuned channel data in a memory (50).

9. The method of claim 8, further comprising:
when the full search function is selected, sequentially fine-tuning a predetermined frequency bandwidth by using the channel tuning unit (10) based on the center frequency of each channel; and
storing the fine-tuned channel data in the memory (50).

10. The method of claim 8 or 9, further comprising:
storing a setting value in a setting storage for automatic channel search selected by a user; and
performing the at least one of the simple search function and the full search function according to the setting value stored in the setting storage.

11. The method of claim 8, 9 or 10, further comprising: when the tuning is completed, generating a UI menu for selecting the full search function.

12. The method of claim 11, further comprising: when the full search function is selected through the UI menu, sequentially fine-tuning a predetermined frequency bandwidth based on the center frequency of each channel.

13. The method of claim 12, further comprising storing fine-tuned channel data in the memory (50).
